# FASCICULE DE BREVET EUROPEEN

(11) **EP 1 931 558 B1**
(45) Date de publication et mention de la délivrance du brevet: **18.08.2010**
(21) Numéro de dépôt: 06743824.2
(22) Date de dépôt: 21.04.2006
(51) Int. Cl.: B62D 65/06

(54) **DISPOSITIF POUR LE MONTAGE D'UNE PORTE SUR LA CAISSE D'UN VEHICULE AUTOMOBILE**
VORRICHTUNG ZUR BEFESTIGUNG EINER TÜR AN DER KAROSSERIE EINES KRAFTFAHRZEUGS
DEVICE FOR MOUNTING A DOOR TO THE BODY OF A MOTOR VEHICLE

(30) Priorité: 18.05.2005 FR 0551286
(43) Date de publication de la demande: 18.06.2008
(73) Titulaire: RENAULT S.A.S., 92100 Boulogne Billancourt (FR)
(72) Inventeur: ALEMAN, Alain, F-78190 Trappes (FR)
(74) Mandataire: Religieux, Vincent
(86) Numéro de dépôt international: PCT/FR2006/050367
(87) Numéro de publication internationale: WO 2006/123078

(56) Documents cités:
- EP-A- 1 281 470
- FR-A- 2 835 233
- FR-A- 2 854 862
- JP-U- 02 056 085
- JP-U- 02 056 085
- PATENT ABSTRACTS OF JAPAN vol. 1995, no. 09, 31 octobre 1995 (1995-10-31) -& JP 07 164872 A (TOYOTA MOTOR CORP), 27 juin 1995 (1995-06-27)
- PATENT ABSTRACTS OF JAPAN vol. 1996, no. 06, 28 juin 1996 (1996-06-28) -& JP 08 039364 A (KANTO AUTO WORKS LTD), 13 février 1996 (1996-02-13)

## Description

L'invention concerne un dispositif pour le montage d'une porte sur la caisse d'un véhicule automobile.

L'invention concerne plus particulièrement un dispositif pour le montage d'une porte sur la caisse d'un véhicule automobile, du type comportant des moyens de positionnement de l'ouvrant par rapport à la caisse dans une position déterminée, dite de ferrage, qui est définie géométriquement dans un trièdre (X, Y, Z) de référence formé par l'axe longitudinal X, l'axe transversal Y et l'axe vertical Z de la caisse, de manière à ferrer l'ouvrant, ainsi positionné, sur la caisse du véhicule.

On connaît de nombreux dispositifs de ce type pour le montage des ouvrants sur la caisse d'un véhicule, tels que les portes latérales avant et arrière. Ces dispositifs sont mis en oeuvre à au moins l'un des postes d'une chaîne de montage pour la fabrication du véhicule.

Le document JP02-56085 U décrit un dispositif pour le montage d'une porte sur la caisse d'un véhicule automobile comportant une ouverture latérale, ledit dispositif comportant des moyens de positionnement de la porte par rapport à la caisse dans une position déterminée, dite de ferrage, de manière à ferrer la porte, ainsi positionnée, sur la caisse du véhicule, les moyens de positionnement comportant une structure provisoire de montage comportant d'une part des premiers moyens pour positionner la structure par rapport à la caisse dans une position d'utilisation dans laquelle la structure est solidaire de la caisse et, d'autre part, des seconds moyens qui coopèrent avec des moyens complémentaires de la porte pour positionner la porte dans sa position de ferrage par rapport à l'ensemble formé de la structure et de la caisse.

On distingue principalement deux configurations de postes de montage pour procéder au ferrage des ouvrants sur de telles chaînes.

Selon une première configuration, les ouvrants sont montés à un poste "fixe", c'est-à-dire sur une caisse immobile alors que, par opposition, selon la seconde configuration, les ouvrants sont montés de manière dynamique "au défilé", c'est-à-dire en même temps que la caisse avance sur la chaîne de montage.

Dans la première configuration, on utilise généralement des outils complexes, automatisés ou non, qui sont susceptibles de prélever un ouvrant, telle qu'une porte comportant des ferrures ou charnières pré-montées, sur un poste de stockage et de positionner l'ouvrant par rapport à la caisse dans une position déterminée de ferrage qui est définie par rapport au référentiel (X, Y, Z) de la caisse du véhicule.

L'ouvrant étant ainsi positionné géométriquement par rapport à la caisse, on procède à son montage ou ferrage sur la caisse par l'intermédiaire de moyens de fixation, tels que des vis ou boulons, qui sont reçus dans des trous complémentaires que comporte la caisse.

Il est donc impératif de maîtriser avec précision le positionnement de l'ouvrant par rapport à la caisse lors de l'opération de montage de l'ouvrant pour obtenir un positionnement correct de l'ouvrant, c'est-à-dire notamment que l'ouvrant soit monté en parfait affleurement avec la caisse.

Or, le positionnement de l'ouvrant dans sa position finale de ferrage est fonction de nombreux paramètres, tels que la précision du positionnement de l'outil, les variations de position de la caisse et donc du référentiel, ou encore les interventions manuelles de l'opérateur.

De manière analogue, dans la seconde configuration dite "au défilé", on utilise des outils de positionnement qui sont montés mobiles pour se déplacer le long de la chaîne et qui doivent donc être asservis en position par rapport au déplacement du référentiel (X, Y, Z) de la caisse du véhicule. De tels outils sont donc particulièrement coûteux et de plus difficiles à implanter le long de la chaîne de montage.

Il existe donc, par rapport aux paramètres d'influence précités pour la première configuration, un risque supplémentaire de dérive de position l'ouvrant qui rend notamment particulièrement difficile la mise au point des outils de sorte que la qualité de finition d'ouvrants ainsi ferrés est variable.

On constate généralement dans la seconde configuration des problèmes de positionnement provoquant ou nécessitant des arrêts intempestifs de la chaîne de montage qui, outre les difficultés de mise au point rencontrées, sont préjudiciables à la productivité, notamment à la bonne tenue des cadences de montage.

Par conséquent, les moyens de positionnement connus de l'état de la technique ne donnent donc pas entière satisfaction.

L'invention a pour but de proposer un dispositif pour le montage d'un ouvrant sur la caisse comportant des moyens de positionnement qui soient notamment économiques, fiables et faciles à mettre en oeuvre.

Dans ce but, l'invention propose un dispositif pour le montage d'une porte sur la caisse d'un vehicule selon la revendication 1.

Grâce à l'invention, les moyens de positionnement sont susceptibles d'être facilement et rapidement mis en oeuvre, en particulier lors du démarrage de la production d'un nouveau véhicule, et garantissent une qualité et une fiabilité de montage des portes, tels que les portes avant et arrière.

Selon d'autres caractéristiques de l'invention :
- les premiers moyens comportent des moyens d'accrochage temporaire de la structure sur la caisse de manière à positionner la structure par rapport à la caisse selon deux premiers X1, Z1 des trois axes X1, Y1, Z1 du premier référentiel, tels que l'axe longitudinal X1 et l'axe vertical Z1, qui déterminent la position d'utilisation de la structure par rapport au trièdre (X, Y, Z) de référence de la caisse ;
- les seconds moyens comportent des moyens de fixation temporaire de la porte sur la structure de manière à positionner la porte par rapport à la structure selon deux premiers X2, Z2 des trois axes X2, Y2, Z2 du second référentiel, tels que l'axe longitudinal X2 et l'axe vertical Z2, qui déterminent la position de ferrage de la porte par rapport au trièdre (X, Y, Z) de référence de la caisse ;

- les premiers moyens comportent des moyens de verrouillage de la structure en position d'utilisation sur la caisse, qui sont montés mobiles entre une position de repos et une position de verrouillage dans laquelle ils immobilisent et positionnent la structure par rapport à la caisse selon le dernier Y1 des trois axes X1, Y1, Z1 dudit premier référentiel ;
- les seconds moyens comportent des moyens de verrouillage de la porte en position de ferrage sur la structure montée en position d'utilisation, qui sont montés mobiles entre une position de repos et une position de verrouillage dans laquelle ils immobilisent et positionnent la porte par rapport à la structure et la caisse selon le dernier Y2 des trois axes X2, Y2, Z2 dudit second référentiel ;
- les moyens d'accrochage de la structure sur la caisse et/ou les moyens de fixation de la porte sur la structure comportent trois points, respectivement désignés points d'accrochage A1, A2, A3 et points de fixation F1, F2, F3, qui sont répartis de manière à former un triangle dont l'aire soit maximale ;
- les trois points d'accrochage A1, A2, A3 en triangle sont situés sur les deux bords verticaux du cadre de la porte que comporte la caisse ;
- les points de fixation F1, F2, F3 de la porte sur la structure sont situés au voisinage des sommets d'une ossature triangulaire formant le corps de la structure ;
- la structure comporte des moyens de centrage, tels que des centreurs, qui coopèrent avec des moyens complémentaires de la caisse et/ou de la porte de pour guider et faciliter le montage de la structure sur la caisse en position d'utilisation, et/ou le montage de la porte sur la structure en position de ferrage ;
- la structure est réalisée en matériau léger et résistant, tel que de la fibre de carbone.

D'autres caractéristiques et avantages de l'invention apparaîtront à la lecture de la description détaillée qui suit pour la compréhension de laquelle on se reportera aux figures annexées parmi lesquelles :
- la figure 1 est une vue schématique de côté qui représente, en éclaté avant montage, une structure provisoire de montage conforme aux enseignements de l'invention et qui est destinée à positionner une porte latérale arrière pour son ferrage sur la caisse du véhicule ;
- la figure 2 est une vue schématique qui représente la structure de montage de la figure 1 montée sur la caisse en position d'utilisation selon un premier référentiel X1, Y1, Z1 donné ;
- la figure 3 est une vue schématique qui représente la porte latérale montée sur la structure de montage positionnée par rapport à la structure selon un second référentiel X2, Y2, Z2 donné dans sa position de ferrage ;
- la figure 4 est une vue schématique qui représente la porte latérale après son ferrage sur la caisse et le démontage de la structure provisoire de montage.

Dans la description et les revendications, on utilisera à titre non limitatif les expressions telles que « arrière » et « avant », « gauche » et « droite », ou « supérieur » et « inférieur » et les orientations « longitudinale », « transversale » et « verticale » en référence au trièdre (X, Y, Z) représenté aux figures et aux définitions données dans la description.

De plus, les éléments identiques, similaires ou analogues de l'invention seront désignés par les mêmes chiffres de référence.

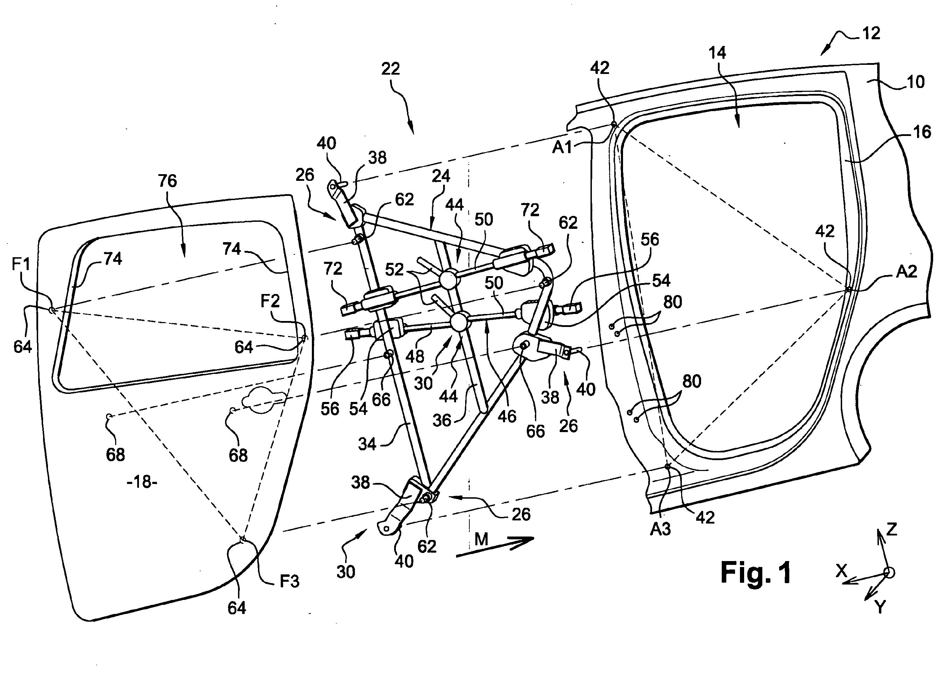

On a représenté partiellement à la figure 1, la partie latérale arrière gauche d'une caisse 10 d'un véhicule automobile 12 comportant une ouverture latérale 14 que délimite un cadre de porte 16 et qui est susceptible d'être fermée par une porte 18.

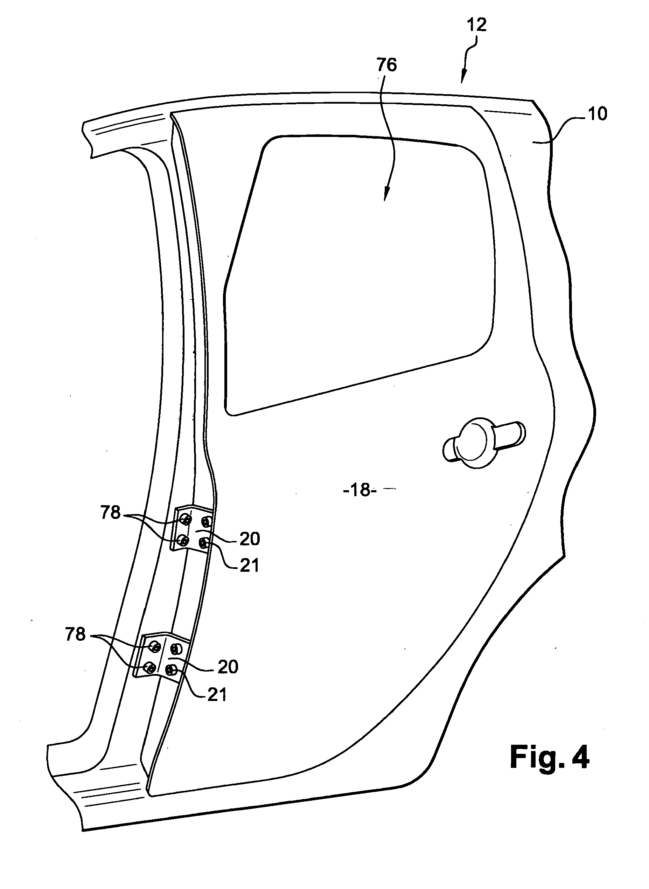

Conventionnellement, la porte 18 est montée sur la caisse 10 par l'intermédiaire de ferrures 20, plus particulièrement illustrées à la figure 4, qui sont solidaires de la porte 18 sur laquelle elles 20 sont avantageusement pré-montées par des moyens de fixation 21, tels que deux vis par ferrure.

L'opération de montage de la porte 18 sur la caisse 10 est donc encore appelée opération de ferrage de la porte 18.

Ainsi, grâce aux ferrures 20, la porte 18 est montée pivotante autour d'un axe globalement vertical respectivement entre une position fermée dans laquelle la porte 18 est en affleurement par rapport à la caisse 10, et une position ouverte pour d'accéder par l'ouverture 14 à l'intérieur du véhicule 12 ou d'en ressortir.

L'opération de montage de la porte 18 sur la caisse 10 est effectuée au moyen d'un dispositif 22 pour le montage d'une porte 18, qui comporte des moyens de positionnement de la porte 18 par rapport à la caisse 10 dans une position déterminée, dite de ferrage.

La position de ferrage de la porte 18 est définie géométriquement dans un trièdre (X, Y, Z) de référence représenté à la figure 1 et qui est formé par l'axe longitudinal X, l'axe transversal Y et l'axe vertical Z de la caisse 10.

Conformément à l'invention, les moyens de positionnement du dispositif 22 comportent une structure provisoire de montage 24 comportant d'une part des premiers moyens 26 pour positionner, selon un premier référentiel X1, Y1 , Z1 donné, la structure 24 par rapport à la caisse 10 dans une position d'utilisation dans laquelle la structure 24 est solidaire de la caisse 10 et, d'autre part, des seconds moyens 28 pour positionner, selon un second référentiel X2, Y2, Z2 donné, la porte 18 dans sa position de ferrage par rapport à l'ensemble constitué par la structure 24 et la caisse 10.

Avantageusement, les premier et second moyens 26, 28 de positionnement sont portés par la structure provisoire de montage 24 de sorte que le montage, en position d'utilisation, de la structure 24 sur la caisse 10 selon le premier référentiel X1, Y1, Z1 détermine automatiquement la position de ferrage de la porte 18 selon le second référentiel X2, Y2, Z2.

Pour ce faire, les premiers moyens 26 comportent des moyens 30 d'accrochage temporaire de la structure 24 sur la caisse 10 de manière à positionner la structure 24 par rapport à la caisse 10 selon deux premiers axes, ici l'axe longitudinal X1 et l'axe vertical Z1, des trois axes X1, Y1, Z1 du premier référentiel qui déterminent la position d'utilisation de la structure 24 par rapport au trièdre (X, Y, Z) de référence de la caisse 10.

De même, les seconds moyens 28 comportent des moyens 32 de fixation temporaire de la porte 18 sur la structure 24 de manière à positionner la porte 18 par rapport à la structure 24 dans la position déterminée de ferrage et qui seront décrits en détails ultérieurement.

Selon un mode de réalisation préféré, la structure provisoire de montage 24 comporte une ossature externe 34, globalement de forme triangulaire, formant le corps principal tubulaire de la structure et au moins une traverse interne 36 de support qui est solidaire de l'ossature externe 34.

Les moyens d'accrochage 30 de la structure 24 sur la caisse 10 sont par exemple constitués par des pattes d'appui 38, ici au nombre de trois, qui comportent chacune au moins un pion 40 s'étendant transversalement vers la droite, c'est-à-dire vers la caisse 10.

En position d'utilisation, chaque pion 40 est reçu dans un trou complémentaire 42 que comporte la caisse 10 pour l'accrochage de la structure 24.

Avantageusement, les trous 42 sont des trous préexistants sur la caisse 10 qui sont destinés à être utilisés ultérieurement à d'autres fins de sorte qu'aucun perçage supplémentaire n'est requis pour permettre le montage de la structure 24 sur la caisse 10.

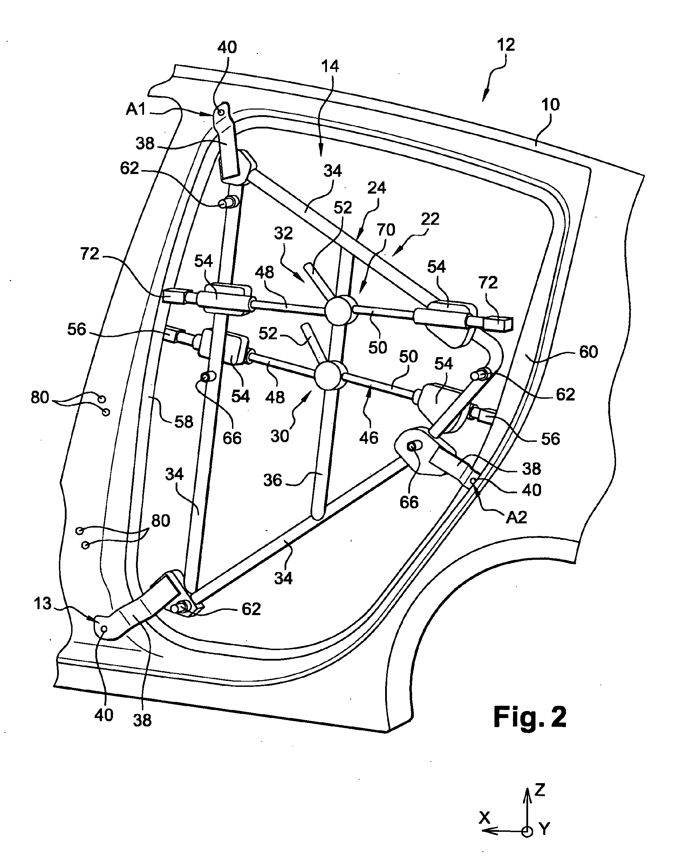

Avantageusement, les pattes d'appui 38 sont sensiblement agencées au voisinage des sommets de l'ossature externe 34 de la structure 24 et chaque patte 38 comporte un profil complémentaire de la partie du cadre de porte 16 sur lequel la patte 38 vient, comme illustré à la figure 2, prendre appui en position d'utilisation de la structure 24.

Le montage de la structure 24 sur la caisse 10 est réalisé selon la direction transversale de la gauche vers la droite suivant la flèche M représentée à la figure 1.

La structure 24 est par exemple mise en place manuellement par un opérateur qui positionne la structure 24 de manière à faire pénétrer les pions 40 faisant saillie par rapport à l'ossature 34 dans les trous 42 correspondants de la caisse 10.

La structure 24 est alors avantageusement positionnée par rapport à la caisse 10 selon l'axe longitudinal X1 et l'axe vertical Z1 du premier référentiel X1, Y1, Z1 donné correspondant à sa position d'utilisation.

De plus, les premiers moyens 26 comportent des moyens de verrouillage 44 de la structure 24 sur la caisse 10 dans sa position d'utilisation.

Avantageusement, la structure 24 est automatiquement positionnée selon le dernier transversal Y1 des trois axes X1, Y1, Z1 du premier référentiel lorsqu'on procède au verrouillage de la structure 24 sur la caisse 10.

Les moyens de verrouillage 44 des premiers moyens 26 sont portés par la traverse interne 36 et l'ossature externe 34 de la structure 24.

Plus précisément, les moyens de verrouillage 44 sont constitués par au moins une barre de verrouillage 46 qui est montée mobile longitudinalement entre une position de repos dans laquelle la barre 46 ne fait pas obstacle au montage de la structure 24 sur la caisse 10 et une position de verrouillage dans laquelle la barre 46 immobilise la structure 24 par rapport à la caisse 10.

La barre de verrouillage 46 s'étend globalement selon la direction longitudinale et comporte respectivement un bras de verrouillage avant 48 et un bras de verrouillage arrière 50.

Les bras de verrouillage 48, 50 sont susceptibles d'être actionnés par un moyen de commande, ici une poignée 52, qui agit sur l'une des extrémités de chacun des bras 48, 50 de manière à provoquer un coulissement longitudinal, respectivement vers l'avant et vers l'arrière, depuis la position de repos jusqu'à la position de verrouillage.

Le coulissement longitudinal de sens opposé de chacun des bras 48, 50 correspond à une course de verrouillage pour la barre 46.

De préférence, l'autre extrémité libre de chacun des bras de verrouillage 48, 50 coulisse, vers l'avant ou vers l'arrière, sur un support de guidage 54 qui est solidaire de l'ossature externe 34.

Chaque bras de verrouillage 48, 50 comporte à son extrémité libre un patin 56 qui, en position de verrouillage, fait saillie longitudinalement par rapport à l'ossature externe 34 de manière à venir coopérer avec le cadre de porte 16 de la caisse 10.

Chaque patin avant et arrière 56 de la barre de verrouillage 46 vient prendre appui contre la surface verticale interne de la caisse 10, qui est opposée transversalement à la surface verticale externe contre laquelle s'appuient les pattes 38, de manière à immobiliser la structure 24 sur la caisse 10 par pincement et à la positionner selon l'axe transversal Y1 dans sa position d'utilisation.

Avantageusement, la position géométrique des trous 42 ou des pions 40 est déterminée de manière à former un triangle dont l'aire soit maximale et dont les sommets constituent globalement trois points d'accrochage de la structure 24 désignés ci-après par A1, A2 et A3.

Comme on peut mieux le voir sur la figure 2 qui illustre la structure 24 en position d'utilisation sur la caisse 10, les trois points d'accrochage A1, A2, A3 sont situés sur le pourtour sensiblement rectangulaire du cadre de porte 16 de la porte 18.

Plus précisément, les points d'accrochage A1, A2, A3 sont situés sur les deux bords verticaux du cadre de porte 16, les points A1 et A3 étant respectivement situés dans l'angle supérieur et dans l'angle inférieur que forme le bord vertical avant 58 avec les bords longitudinaux supérieur et inférieur tandis que le dernier point A2 est situé sur le bord vertical arrière 60 sensiblement à mi-hauteur de celui-ci.

De surcroît, les points d'accrochage A1, A2, A3 sont positionnés de manière à faciliter, après le ferrage de la porte 18, le démontage de la structure provisoire 24, opérations qui seront détaillées ultérieurement.

Avantageusement, la structure 24 comporte des moyens de centrage (non représentés) qui coopèrent avec des moyens complémentaires de la caisse 10 pour guider et faciliter le montage de la structure 24 sur la caisse 10 jusqu'à son verrouillage en position d'utilisation.

La première étape de montage de la structure 24 sur la caisse 10 et son verrouillage par les moyens 44 dans sa position d'utilisation étant réalisé, on procède alors au montage de la porte 18 sur la structure 24 et donc la caisse 10.

Comme évoqué précédemment, les seconds moyens 28 comportent des moyens 32 de fixation temporaire de la porte 18 sur la structure 24.

Ces moyens de fixation 32 permettent de positionner la porte 18 par rapport à la structure 24 selon deux premiers axes, ici l'axe longitudinal X2 et l'axe vertical Z2, des trois axes X2, Y2, Z2 du second référentiel qui déterminent la position de ferrage de la porte 18 par rapport au trièdre (X, Y, Z) de référence de la caisse 10.

Les moyens de fixation 32 de la porte 18 comportent des tétons 62 qui sont solidaires de la structure 24 à partir de laquelle ils s'étendent transversalement vers la gauche, en direction de la porte 18. Les tétons 62 sont destinés à pénétrer lors du montage dans des orifices 64 complémentaires de la face verticale interne de la porte 18, qui sont notamment représentés en trait silhouette sur la figure 1.

Avantageusement, la position géométrique des trois tétons 62 est déterminée de manière à former un triangle dont l'aire soit maximale et dont les sommets constituent globalement trois points de fixation de la porte 18 sur la structure 24 désignés ci-auprès par F1, F2 et F3.

Avantageusement, la structure 24 comporte des moyens de centrage de la porte 18, tels que des centreurs 66, qui coopèrent avec des trous complémentaires 68 de la porte 18 pour en guider et faciliter le montage en position de ferrage sur la structure 24 et la caisse 10.

Lorsque les tétons 62 sont reçus dans les orifices 64 de la porte 18, la porte 18 se trouve alors positionnée respectivement selon l'axe longitudinal X2 et l'axe vertical Z2 du second référentiel X2, Y2, Z2.

Les seconds moyens 28 comportent aussi des moyens de verrouillage 70 de la porte 18 pour la verrouiller en position de ferrage sur la structure 24 préalablement montée en position d'utilisation sur la caisse 10.

Les moyens de verrouillage 70 des seconds moyens 28 sont ici analogues aux moyens de verrouillage 44 des premiers moyens 26 décrits précédemment.

Les moyens de verrouillage 70 de la porte 18 sont montés mobiles entre une position de repos et une position de verrouillage dans laquelle ils immobilisent et positionnent la porte 18 par rapport à la structure 24 et la caisse 10 selon le dernier axe vertical Y2 des trois axes X2, Y2, Z2 du second référentiel.

Les moyens de verrouillage 70 comportent ainsi une barre de verrouillage 46 constituée par deux bras de verrouillage, avant 48 et arrière 50, qui sont actionnés entre les positions de repos et de verrouillage par l'intermédiaire d'une autre poignée 52.

Les bras de verrouillage avant 48 et arrière 50 sont montés coulissant longitudinalement selon une course de verrouillage donnée et sont guidés à leur extrémité libre par des supports 54.

Les moyens de verrouillage 70 comportent des patins 72 qui, en position de verrouillage, sont avantageusement reçus dans les puits verticaux 74 de la porte 18 qui sont destinés à recevoir une vitre latérale (non représentée) qui est susceptible d'y coulisser verticalement.

En l'absence d'une telle vitre qui est montée ultérieurement, la poignée 52 d'actionnement des moyens de verrouillage 70 est facilement accessible pour un opérateur à travers l'ouverture 76 de la porte 18 prévue pour ladite vitre.

De préférence, les points d'accrochage A1, A2, A3 et les points de fixation F1, F2, F3 de la structure 24 sont agencés au voisinage des sommets de l'ossature 34 de la structure triangulaire 24.

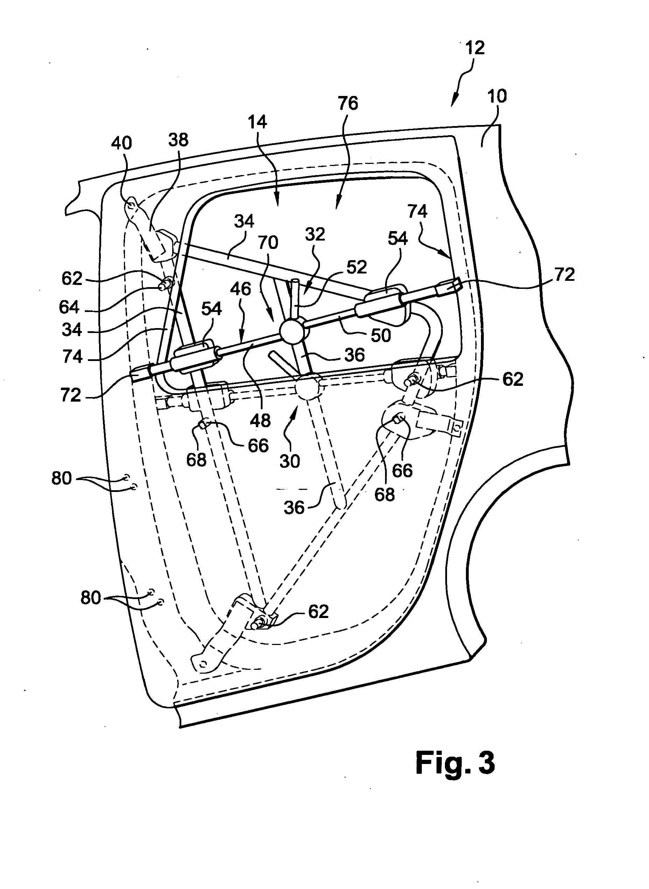

La porte 18 étant après son montage et son verrouillage sur la structure 24 positionnée dans sa position de ferrage illustrée par la figure 3.

On procède alors au ferrage de la porte 18 sur la caisse 10, ici en fixant les deux ferrures 20 de la porte par l'intermédiaire de moyen de fixation 78.

Comme on peut mieux le voir sur la figure 4, les moyens de fixation sont par exemple constitués par des vis 78 qui sont reçues dans des trous complémentaires 80 de la caisse 10 pour fixer les ferrures 20.

La porte 18 est montée solidaire de la caisse 10 par rapport à laquelle elle est susceptible de pivoter par l'intermédiaire des ferrures 20 entre ses deux positions extrêmes respectivement ouverte et fermée.

En position fermée, la porte 18 ainsi ferrée est alors positionnée de manière à venir en affleurement avec les parties adjacentes de la caisse 10.

L'opération de ferrage de la porte 18 étant achevée, on procède alors au démontage de la structure provisoire de montage 24 en déverrouillant d'abord les moyens de verrouillage 70 de la porte 18 sur la structure 24 pour permettre l'ouverture de la porte. Ensuite, on ouvre la porte 18 pour accéder à la structure 24 qui, après déverrouillage des moyens de verrouillage 44 de la structure 24 sur la caisse 10, peut être démontée en tirant de manière à désengager les pions 40 des trous 42 pour libérer totalement la structure 24.

Comme on peut le voir sur la figure 4, après démontage de la structure 24, la porte 18 est ici refermée sur la caisse 10 du véhicule qui poursuit son cheminement sur la chaîne de montage.

Avantageusement, la structure provisoire de montage 24 est en un matériau résistant et léger, tel que de la fibre de carbone ou matériau similaire, de manière à être aisément manipulée par un opérateur en permettant un respect des cadences de montage.

Le dispositif pour le montage de la porte selon l'invention est donc particulièrement flexible à mettre en oeuvre notamment en ce qu'il ne requiert pas de mise au point longue et coûteuse.

Par conséquent, la structure provisoire de montage 24 permet un gain de temps très appréciable en particulier lors du démarrage d'une nouvelle chaîne de montage.

Avantageusement, la structure de montage est susceptible d'être utilisée par un opérateur de manière totalement indépendante des autres postes que comporte la chaîne de montage.

## Revendications

1. Dispositif (22) pour le montage d'une porte (18) sur la caisse (10) d'un véhicule automobile (12) comportant une ouverture latérale (14) que délimite un cadre de porte (16) et qui est susceptible d'être fermée par la porte (18), ledit dispositif (22) comportant des moyens de positionnement de la porte par rapport à la caisse (10) dans une position déterminée, dite de ferrage, qui est définie géométriquement dans un trièdre (X,Y,Z) de référence formé par l'axe longitudinal X, l'axe transversal Y et l'axe vertical Z de la caisse (10), de manière à ferrer la porte (18), ainsi positionnée, sur la caisse (10) du véhicule (12),
les moyens de positionnement comportant une structure provisoire de montage (24) comportant d'une part des premiers moyens (26) pour positionner, selon un premier référentiel X1, Y1, Z1 donné, la structure (24) par rapport à la caisse (10) dans une position d'utilisation dans laquelle la structure (24) est solidaire de la caisse (10) et, d'autre part, des seconds moyens (28) qui coopèrent avec des moyens complémentaires de la porte (18) pour positionner, selon un second référentiel X2, Y2, Z2 donné, la porte (18) fermée dans sa position de ferrage par rapport à l'ensemble formé de la structure et de la caisse.

2. Dispositif selon la revendication 1, **caractérisé en ce que** les premiers moyens (26) comportent des moyens d'accrochage temporaire (30) de la structure (24) sur la caisse (10) de manière à positionner la structure (24) par rapport à la caisse (10) selon deux premiers X1, Z1 des trois axes X1, Y1, Z1 du premier référentiel, tels que l'axe longitudinal X1 et l'axe vertical Z1, qui déterminent la position d'utilisation de la structure (24) par rapport au trièdre (X, Y, Z) de référence de la caisse (10).

3. Dispositif selon la revendication 1, **caractérisé en ce que** les seconds moyens (28) comportent des moyens de fixation temporaire (32) de la porte (18) sur la structure (24) de manière à positionner la porte (18) par rapport à la structure (24) selon deux premiers X2, Z2 des trois axes X2, Y2, Z2 du second référentiel, tels que l'axe longitudinal X2 et l'axe vertical Z2, qui déterminent la position de ferrage de la porte (18) par rapport au trièdre (X, Y, Z) de référence de la caisse (10).

4. Dispositif selon l'une quelconque des revendications 1 à 3, **caractérisé en ce que** les premiers moyens (26) comportent des moyens de verrouillage (44) de la structure (24) en position d'utilisation sur la caisse (10), qui sont montés mobiles entre une position de repos et une position de verrouillage dans laquelle ils immobilisent et positionnent la structure (24) par rapport à la caisse (10) selon le dernier Y1 des trois axes X1, Y1 , Z1 dudit premier référentiel.

5. Dispositif selon la revendication 4, **caractérisé en ce que** les seconds moyens (28) comportent des moyens de verrouillage (70) de la porte (18) en position de ferrage sur la structure (24) montée en position d'utilisation, qui sont montés mobiles entre une position de repos et une position de verrouillage dans laquelle ils immobilisent et positionnent la porte (18) par rapport à la structure (24) et la caisse (10) selon le dernier Y2 des trois axes X2, Y2, Z2 dudit second référentiel.

6. Dispositif selon l'une quelconque des revendications précédentes, **caractérisé en ce que** les moyens d'accrochage (30) de la structure (24) sur la caisse (10) et/ou les moyens de fixation (32) de la porte (18) sur la structure (24) comportent trois points, respectivement désignés points d'accrochage A1, A2, A3 et points de fixation F1, F2, F3, qui sont répartis de manière à former un triangle dont l'aire soit maximale.

7. Dispositif selon la revendication 6, **caractérisé en ce que** les trois points d'accrochage A1, A2, A3 en triangle sont situés sur les deux bords verticaux (58, 60) du cadre (16) de la porte (18) que comporte la caisse (10).

8. Dispositif selon la revendication 6, **caractérisé en ce que** les points de fixation F1, F2, F3 de l'ouvrant (18) sur la structure (24) sont situés au voisinage des sommets d'une ossature triangulaire (34) formant le corps de la structure (24).

9. Dispositif selon l'une quelconque des revendications précédentes, **caractérisé en ce que** la structure (24) comporte des moyens de centrage (66), tels que des centreurs, qui coopèrent avec des moyens complémentaires (68) de la caisse (10) et/ou de la porte (18) de pour guider et faciliter le montage de la structure (24) sur la caisse (10) en position d'utilisation, et/ou le montage de la porte (18) sur la structure (24) en position de ferrage.

10. Dispositif selon l'une quelconque des revendications précédentes, **caractérisé en ce que** la structure (24) est réalisée en matériau léger et résistant, tel que de la fibre de carbone.

## Claims

1. Device (22) for mounting a door (18), on the body (10) of a motor vehicle (12), comprising a lateral opening (14) which is delimited by a door surround (16) and which can be closed off by the door (18), said device (22) comprising means for positioning the door with respect to the body (10) in a determined position known as the fitting position, which is defined geometrically in a three-dimensional axis system (X, Y, Z) formed by the longitudinal axis X, the transverse axis Y and the vertical axis Z of the body (10) so that the door (18), thus positioned, can be fitted on the body (10) of the vehicle (12),
the positioning means comprising a temporary mounting structure (24) comprising, on the one hand, first means (26) for positioning the structure (24), according to a first given reference frame X1, Y1, Z1, relative to the body (10) in a position of use in which the structure (24) is secured to the body (10) and, on the other hand, second means (28) which collaborate with complementary means belonging to the door (18) for positioning the closed door (18), according to a second given reference frame X2, Y2, Z2, in its fitting position with respect to the entity formed by the structure and the body.

2. Device according to Claim 1, **characterized in that** the first means (26) comprise means (30) of temporarily attaching the structure (24) to the body (10) in such a way as to position the structure (24) relative to the body (10) with respect to a first two X1, Z1 of the three axes X1, Y1, Z1 of the first reference frame, such as the longitudinal axis X1 and the vertical axis Z1, which determine the position of use of the structure (24) with respect to the three-dimensional axis system (X, Y, Z) of the body (10).

3. Device according to Claim 1, **characterized in that** the second means (28) comprise means (32) of temporarily fixing the door (18) to the structure (24) so as to position the door (18) relative to the structure (24) with respect to a first two X2, Z2 of the three axes X2, Y2, Z2 of the second reference frame, such as the longitudinal axis X2 and the vertical axis Z2, which determine the fitting position of the door (18) relative to the three-dimensional axis system (X, Y, Z) of the body (10).

4. Device according to any one of Claims 1 to 3, **characterized in that** the first means (26) comprise means (44) for locking the structure (24) in the position of use on the body (10), which locking means are mounted such that they can move between a position of rest and a locked position in which they immobilize and position the structure (24) relative to the body (10) with respect to the last Y1 of the three axes X1, Y1, Z1 of said first reference frame.

5. Device according to Claim 4, **characterized in that** the second means (28) comprise means (70) for locking the door (18) in the fitting position on the structure (24) mounted in the position of use, which locking means are mounted such that they can move between a position of rest and a locked position in which they immobilize and position the door (18) relative to the structure (24) and the body (10) with respect to the last Y2 of the three axes X2, Y2, Z2 of said second reference frame.

6. Device according to any one of the preceding claims, **characterized in that** the means (30) of attaching the structure (24) to the body (10) and/or the means (32) for fixing the door (18) to the structure (24) comprise three points termed attachment points A1, A2, A3 and fixing points F1, F2, F3, respectively, which are distributed in such a way as to form a triangle of maximum area.

7. Device according to Claim 6, **characterized in that** the three attachment points A1, A2, A3 in a triangle are situated on the two vertical sides (58, 60) of the surround (16) of the door (18) that the body (10) has.

8. Device according to Claim 6, **characterized in that** the fixing points F1, F2, F3 for fixing the door (18) to the structure (24) are situated near the vertexes of a triangular skeleton (34) that forms the framework of the structure (24).

9. Device according to any one of the preceding claims, **characterized in that** the structure (24) comprises centering means (66) such as locators which collaborate with complementary means (68) belonging to the body (10) and/or to the door (18) to guide and assist with mounting the structure (24) on the body (10) in the position of use and/or with mounting the door (18) on the structure (24) in the fitting position.

10. Device according to any one of the preceding claims, **characterized in that** the structure (24) is made of a strong lightweight material such as carbon fiber.

## Patentansprüche

1. Vorrichtung (22) zur Montage einer Tür (18) an den Aufbau (10) eines Kraftfahrzeugs (12), der eine seitliche Öffnung (14) aufweist, die von einem Türrahmen (16) begrenzt wird und die von der Tür (18) verschlossen werden kann, wobei die Vorrichtung (22) Einrichtungen zur Positionierung der Tür bezüglich des Aufbaus (10) in einer bestimmten Stellung, Anschlagstellung genannt, aufweist, die geometrisch in einem Bezugskoordinatensystem (X,Y,Z) definiert ist, das von der Längsachse X, der Querachse Y und der senkrechten Achse Z des Aufbaus (10) geformt wird, um die so positionierte Tür (18) an den Aufbau (10) des Fahrzeugs (12) anzuschlagen,
wobei die Positionierungseinrichtungen eine provisorische Montagestruktur (24) aufweisen, die einerseits erste Einrichtungen (26), um die Struktur (24) bezüglich des Aufbaus (10) in einer Betriebsstellung, in der die Struktur (24) fest mit dem Aufbau (10) verbunden ist, gemäß einem ersten gegebenen Bezugssystem X1, Y1, Z1 zu positionieren, und andererseits zweite Einrichtungen (28) aufweist, die mit komplementären Einrichtungen der Tür (18) zusammenwirken, um die geschlossene Tür (18) bezüglich der von der Struktur und dem Aufbau gebildeten Einheit gemäß einem zweiten gegebenen Bezugssystem X2, Y2, Z2 in ihrer Anschlagsstellung zu positionieren.

2. Vorrichtung nach Anspruch 1, **dadurch gekennzeichnet, dass** die ersten Einrichtungen (26) Einrichtungen zur vorübergehenden Ankopplung (30) der Struktur (24) an den Aufbau (10) aufweisen, um die Struktur (24) bezüglich des Aufbaus (10) gemäß zwei ersten X1, Z1 der drei Achsen X1, Y1, Z1 des ersten Bezugssystems, wie die Längsachse X1 und die senkrechte Achse Z1, zu positionieren, die die Betriebsstellung der Struktur (24) bezüglich des Bezugskoordinatensystems (X,Y,Z) des Aufbaus (10) bestimmen.

3. Vorrichtung nach Anspruch 1, **dadurch gekennzeichnet, dass** die zweiten Einrichtungen (28) Einrichtungen zur vorübergehenden Befestigung (32) der Tür (18) an der Struktur (24) aufweisen, um die Tür (18) bezüglich der Struktur (24) gemäß zwei ersten X2, Z2 der drei Achsen X2, Y2, Z2 des zweiten Bezugssystems, wie die Längsachse X2 und der senkrechte Achse Z2, zu positionieren, die die Anschlagstellung der Tür (18) bezüglich des Bezugskoordinatensystems (X,Y,Z) des Aufbaus (10) bestimmen.

4. Vorrichtung nach einem der Ansprüche 1 bis 3, **dadurch gekennzeichnet, dass** die ersten Einrichtungen (26) Verriegelungseinrichtungen (44) der Struktur (24) in der Betriebsstellung am Aufbau (10) aufweisen, die zwischen einer Ruhestellung und einer Verriegelungsstellung beweglich montiert sind, in der sie die Struktur (24) bezüglich des Aufbaus (10) gemäß der letzten Y1 der drei Achsen X1, Y1, Z1 des ersten Bezugssystems blockieren und positionieren.

5. Vorrichtung nach Anspruch 4, **dadurch gekennzeichnet, dass** die zweiten Einrichtungen (28) Verriegelungseinrichtungen (70) der Tür (18) in der Anschlagstellung auf der in der Betriebsstellung montierten Struktur (24) aufweisen, die zwischen einer Ruhestellung und einer Verriegelungsstellung beweglich montiert sind, in der sie die Tür (18) bezüglich der Struktur (24) und des Aufbaus (10) gemäß der letzten Y2 der drei Achsen X2, Y2, Z2 des zweiten Bezugssystems blockieren und positionieren.

6. Vorrichtung nach einem der vorhergehenden Ansprüche, **dadurch gekennzeichnet, dass** die Ankopplungseinrichtungen (30) der Struktur (24) an den Aufbau (10) und/oder die Befestigungseinrichtungen (32) der Tür (18) an der Struktur (24) drei Punkte aufweisen, als Ankopplungspunkte A1, A2, A3 bzw. als Befestigungspunkte F1, F2, F3 bezeichnet, die so verteilt sind, dass sie ein Dreieck bilden, dessen Flächeneinheit maximal ist.

7. Vorrichtung nach Anspruch 6, **dadurch gekennzeichnet, dass** die drei im Dreieck angeordneten Ankopplungspunkte A1, A2, A3 sich auf den zwei senkrechten Rändern (58, 60) des Rahmens (16) der Tür (18) befinden, den der Aufbau (10) aufweist.

8. Vorrichtung nach Anspruch 6, **dadurch gekennzeichnet, dass** die Befestigungspunkte F1, F2, F3 der Tür (18) an der Struktur (24) sich in der Nähe der Scheitel eines dreieckigen Gerüsts (34) befinden, das den Körper der Struktur (24) bildet.

9. Vorrichtung nach einem der vorhergehenden Ansprüche, **dadurch gekennzeichnet, dass** die Struktur (24) Zentriereinrichtungen (66), wie Zentriervorrichtungen, aufweist, die mit komplementären Einrichtungen (68) des Aufbaus (10) und/oder der Tür (18) zusammenwirken, um die Montage der Struktur (24) auf den Aufbau (10) in der Betriebsstellung und/oder die Montage der Tür (18) auf die Struktur (24) in der Anschlagstellung zu führen und zu vereinfachen.

10. Vorrichtung nach einem der vorhergehenden Ansprüche, **dadurch gekennzeichnet, dass** die Struktur (24) aus einem leichten und widerstandsfähigen Material wie Kohlenstofffaser hergestellt ist.
